# EUROPEAN PATENT APPLICATION

(11) **EP 2 511 817 A1**
(43) Date of publication of application: **17.10.2012**
(21) Application number: 12161582.7
(22) Date of filing: 27.03.2012
(51) Int. Cl.: G06F 9/44, H04N 21/485

(54) **Display apparatus and control method thereof**

(30) Priority: 12.04.2011 KR 20110033628; 17.11.2011 KR 20110120017
(71) Applicant: Samsung Electronics Co., Ltd., Suwon-si, Gyeonggi-do, 443-742 (KR)
(72) Inventor: Lee, Hee-ran, Gyeonggi-do (KR); Song, In-jee, Gyeonggi-do (KR); Shin, Seung-min, Gyeonggi-do (KR); Choi, Sung-wook, Seoul (KR); Lee, Hye-jeong, Seoul (KR)
(74) Representative: Hancox, Jonathan Christopher

(57) **Abstract**

Provided are a display apparatus and a control method thereof. The display apparatus includes: a display unit; a video processor which processes an image to be displayed on the display unit; a storage unit which stores status information related to at least one of a structure and a function of the display apparatus; and a controller which, when an event for performing a process including a plurality of sequential steps occurs, controls the video processor so that a plurality of user interface (UI) images for setting up the plurality of sequential steps are displayed in correspondence with the steps on the display unit, wherein the controller controls a UI image corresponding to a first step among the plurality of sequential steps to include at least one of setup guide information for the first step and guide information for a second step following the first step according to current status information.

## Description

The present invention relates to a display apparatus displaying an image based on a video signal and a control method thereof, and more particularly to a display apparatus configured to offer an explanation about a structure and a function of the apparatus or setting methods for a user.

A display apparatus processes a video signal received from an external video source, and displays the processed video signal as an image on a display panel achieved, for example, by a liquid crystal or the like. The display apparatus provided to a general user is achieved by a television (TV), a monitor, etc. For example, the display apparatus for the TV provides an image of a broadcasting channel desired by a user by applying various processes such as tuning, decoding, etc., to a broadcasting signal received from an exterior.

With development of technology and increase of contents, such a display apparatus uses a relatively developed data processing speed and capacity to perform and provide more complicated functions beyond a level of simply providing video contents. For example, functions for terminal or hub for home networking, communication with an external network, drive of various kinds of application, etc., may be implemented in the display apparatus. However, the more complicated the functions, the more complicated a use thereof. Therefore, it may be difficult for a user to get an explanation and an operational method about his/her desired function among the functions supported by the display apparatus.

According to one aspect of the invention, there is provided a display apparatus including: a display unit; a video processor which processes an image to be displayed on the display unit; a storage unit which stores status information related to at least one of a structure and a function of the display apparatus; and a controller which, in response to an event for performing a process including a plurality of sequential steps, controls the video processor so that a plurality of user interface (UI) images for setting up the steps are sequentially displayed corresponding to the steps on the display unit, wherein the controller controls a UI image corresponding to a first step among the plurality of steps to include at least one of setup guide information for the first step and guide information for a second step following the first step on the basis of current status information.

The controller may skip over the second step after the first step and display a UI image corresponding to a third step following the second step if a setup status in the second step for implementing the process is equal to a current status of the display apparatus.

The storage unit may store use pattern information of a user with regard to the display apparatus, and the controller may determine whether the setup status in the second step is equal to the current status of the display apparatus on the basis of at least one of the use pattern information and the status information stored in the storage unit.

The setup guide information for the first step may include an emphasis on a setup or selection item in the UI image to implement the process.

The emphasis on the item may include at least one of highlighting the item, automatically moving a cursor/pointer to the item, and causing the item to flicker.

The guide information for the second step may include a message window containing a description about at least one of a content and a setup method of the second step.

The controller may display a lump-proceeding UI image that provides a setup for the plurality of steps to be individually implemented when the event for performing the process occurs, and may perform the plurality of steps in a lump in accordance with the setup through the lump-proceeding UI image.

The storage unit may further store a user's use pattern information about the display apparatus, and the controller may determine a recommendation setup about each step based on at least one of the use pattern information and the status information stored in the storage unit, and display the determined recommendation setup as a default value of each step in the lump-proceeding UI image.

The display apparatus may further include a user input unit for generating the event for performing the first process.

According to another aspect of the invention, there is provided a control method of a display apparatus, the method including: generating an event of executing a process including a plurality of sequential steps; and displaying a plurality of UI images for setup of the steps in sequence corresponding to the respective steps, wherein a UI image, which corresponds to a first step among the plurality of steps, includes at least one of setup guide information for the first step and guide information for a second step following the first step on the basis of current status information.

The displaying the UI image may include skipping over the second step after the first step and displaying a UI image corresponding to a third step following the second step if a setup status in the second step for implementing the process is equal to a current status of the display apparatus.

The displaying the UI image corresponding to the third step may include determining whether the setup status in the second step is equal to the current status of the display apparatus on the basis of at least one of the use pattern information and the status information about the display apparatus.

The setup guide information for the first step may include an emphasis on a setup or selection item in the UI image to implement the process.

The emphasis on the item may include at least one of highlighting the item, automatically moving a cursor/pointer to the item, and causing the item to flicker.

The guide information for the second step may include a message window containing a description about at least one of a content and a setup method of the second step.

The displaying the UI image may include displaying a lump-proceeding UI image that provides a setup for the plurality of steps to be individually implemented; and performing the plurality of steps in a lump in accordance with setup through the lump-proceeding UI image.

The displaying the lump-proceeding UI image may include determining a recommendation setup about each step based on at least one of the use pattern information and the status information of the display apparatus; and displaying the determined recommendation setup as a default value of each step in the lump-proceeding UI image.

According to an aspect of another exemplary embodiment, there is provided a control method of an image processing apparatus, the method including: generating an event for performing a process including a plurality of sequential steps; and outputting, in sequence corresponding to the plurality of sequential steps, a plurality of user interface (UI) images for setup of the plurality of sequential steps, wherein a UI image, among the plurality of UI images, corresponding to a first step among the plurality of sequential steps includes setup guide information for the first step according to current status information.

According to an aspect of another exemplary embodiment, there is provided an image processing apparatus including: a video processor which processes an image for output; and a controller which, in response to an event for performing a process comprising a plurality of sequential steps, controls the video processor so that a plurality of user interface (UI) images for setting up the plurality of sequential steps are output for sequential display in correspondence with the plurality of sequential steps, wherein the controller controls a UI image, among the plurality of UI images, corresponding to a first step among the plurality of sequential steps to include setup guide information for the first step according to current status information.

The above and/or other aspects will become apparent and more readily appreciated from the following description of exemplary embodiments, taken in conjunction with the accompanying drawings, in which:
FIG. 1 is a block diagram of a display apparatus according to a first exemplary embodiment;
FIG. 2 is a conceptual diagram showing a process of searching a database on the basis of a keyword in the display apparatus of FIG. 1;
FIG. 3 shows an example of a UI image and a manual image in the display apparatus of FIG. 1;
FIG. 4 is a control flowchart showing a control method of the display apparatus of FIG. 1.
FIG. 5 is a conceptual diagram of signal transmission/reception between a server and a display apparatus according to a second exemplary embodiment;
FIGs. 6 to 10 are examples of UI images corresponding to steps of a preset process in a display apparatus according to a third exemplary embodiment;
FIG. 11 is a control flowchart showing a method of controlling the display apparatus according to the third exemplary embodiment;
FIG. 12 is a conceptual view showing a display order of UI images corresponding to steps of a preset process in a display apparatus according to a fourth exemplary embodiment; and
FIG. 13 is an example of a UI image for setting up steps of a preset process in a lump in a display apparatus according to a fifth exemplary embodiment.

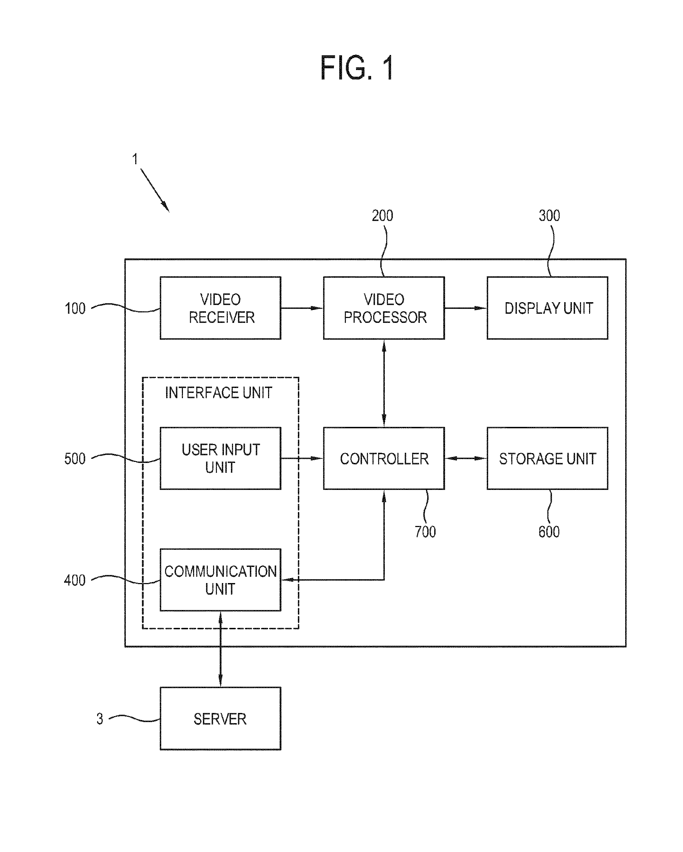

FIG. 1 is a block diagram of a display apparatus 1 according to a first exemplary embodiment.

As shown in FIG. 1, the display apparatus 1 includes a video receiver 100 to receive a video signal from an external video source (not shown), a video processor 200 to process a video signal received in the video receiver 100 to be displayed as an image, a display unit 300 to display an image processed by the video processor 200, an interface unit 400, 500 to communicate with an exterior and transmit/receive a signal/data/information or the like, a storage unit 600 to store the signal/data/information or the like, and a controller 700 to control an operation of general configuration of the display apparatus 1. While the present exemplary embodiment is described with reference to a display apparatus 1 including a display unit 300, it is understood that another exemplary embodiment is not limited thereto. For example, another exemplary embodiment may be applied to an image processing apparatus (such as a set-top box) that does not include a display unit 300.

The video receiver 100 receives a video signal through a wire or wirelessly and transmits the received video signal to the video processor 200. The video receiver 100 may be achieved by various forms in accordance with a format of a received video signal or a type of the display apparatus 1. If a video signal is a broadcasting signal, the video receiver 100 includes a tuner to be tuned to a channel corresponding to the broadcasting signal.

For example, if the display apparatus 1 is a TV, the video receiver 100 may receive a radio frequency (RF) signal transmitted from a broadcasting station (not shown); a video signal complying with composite/component video, super video, Syndicat des Constructeurs des Appareils Radiorécepteurs et Téléviseurs (SCART), high definition multimedia interface (HDMI), DisplayPort, unified display interface (UDI), or wireless HD standards; etc. Also, if the display apparatus 1 is a monitor for a computer, the video receiver 100 may comply with D-SUB capable of transmitting an RGB signal based on VGA; digital video interactive (DVI) standards such as DVI- analog (A), DVI-integrated digital/analog (I) and DVI- digital (D); HDMI standards; etc.

The video processor 200 performs various video processes with respect to a video signal. The video processor 200 performs such processes and outputs a video signal to the display unit 300, thereby allowing an image to be displayed on the display unit 300.

The kinds of video processes performed by the video processor 200 are not limited, and may for example include decoding and encoding corresponding to various video formats, de-interlacing, frame refresh rate conversion, scaling, noise reduction for improving picture quality, detail enhancement, etc. The video processor 200 may be achieved by individual configurations where respective processes are independently performed, or an integrated configuration where many functions are integrated.

The display unit 300 displays an image based on a video signal output from the video processor 200. The display unit 300 may be achieved by liquid crystal, plasma, light-emitting diode, organic light-emitting diode, surface-conduction electron-emitter, carbon nano-tube, nano-crystal, etc., but is not limited thereto.

The interface unit 400, 500 allows the display apparatus 1 to transmit, receive, and/or exchange signal/data/information with regard to a user's operation or an external network. The interface unit 400, 500 includes a communication unit 400 having an access to and communicating with a server 3 through a predetermined protocol-based network, and a user input unit 500 operated by a user to output predetermined information or a preset command corresponding to the user's operation to the controller 700.

The communication unit 400 performs interactive communication so that the controller 700 can transmit and receive predetermined data to and from the server 3. Under control of the controller 700, the communication unit 400 transmits data stored in the storage unit 600 to the server 3, or transmits data received from the server 3 to the controller 700. There is no limit to how the communication unit 400 accesses the server 3, and various wired and/or wireless protocols may be applicable.

The user input unit 500 transmits preset various control commands or predetermined character strings to the controller 700 in accordance with a user's operation or input. The controller 700 performs a process corresponding to a characteristic of a relevant signal in accordance with a signal transmitted from the user input unit 500. The user input unit 500 may be achieved by a menu key and an input panel arranged in an outside of the display apparatus 1, a remote controller remotely separated from the display apparatus 1, etc.

The storage unit 600 includes a readable/writable non-volatile memory such as a flash memory or a hard disk drive. The storage unit 600 is accessible by the controller 700, so that the controller 700 can perform searching, reading, writing, modifying, etc., with regard to the stored data.

With this configuration, according to an exemplary embodiment, the storage unit 600 stores status information about at least one of a structure and a function of the display apparatus 1, and a database of manual information corresponding to a plurality of preset processes to be implemented in the display apparatus 1. Further, the controller 700 searches the manual information corresponding to a first process from the database of the storage unit 600 on the basis of the status information of the display apparatus 1 at the point in time when the first process is implemented among the plurality of preset processes, and controls the searched manual information to be displayed.

Thus, with regard to a function desired by a user, an explanation about the corresponding function can be readily offered to a user to easily set up the status of the corresponding function.

Here, the status information includes a variety of information corresponding to a status related to at least one of a structure and a function of the display apparatus 1. For example, the status information may include items, of which settings can be changed by a user, for example, selection of video signal sources (not shown) to be processed by the video processor 200 or adjustment for quality of an image displayed on the display unit 300; and items of which settings cannot be changed by a user, for example, a communication status of when the display apparatus 1 is connected to the communication network, in the structure/function of the display apparatus 1.

Also, the structure and the function of the display apparatus 1 include specifications of hardware and software constituting the display apparatus 1, and a relationship therebetween.

As an example of the status information, the display apparatus 1 may have one of a first mode to receive a broadcasting signal from a broadcasting station, a second mode to locally receive a video signal from a digital versatile disc (DVD)/Blu-ray (BD) player (not shown), and a third mode to read video data stored in built-in memory (not shown) in accordance with acquirement types of the video signal for displaying an image on the display unit 300.

If a user wants to execute the first process for changing a reproducing speed of an image displayed on the display unit 300, a method of changing the reproducing speed of an image may be varied depending on which one of the first mode, the second mode, and the third mode the display apparatus is in.

When an event for executing such a first process occurs, for example, when a reproducing speed changing button of the remote controller (not shown) is pressed, the controller 700 determines a current mode of the display apparatus 1, and selects the manual information of the first process corresponding to the relevant mode, thereby displaying the selected manual information.

In addition to the status information, the storage unit 600 may store use pattern information of a user about the structure/function of the display apparatus 1. A user's use pattern may include use history information of the display apparatus, e.g., a user's profile such as personal data, a user's preference for video contents, records of video contents viewed by a user, etc. The use pattern information may be directly input by a user through the user input unit 500 or generated as the controller 700 collects use records during a preset period of time. The use pattern information may be varied in a stage of designing the apparatus.

According to the present exemplary embodiment, the first process may include a user's operation for inputting a predetermined keyword through the user input unit 500. That is, if a predetermined keyword is received through the user input unit 500, the controller 700 selects and displays the manual information corresponding to the relevant keyword on the basis of the status information. When the manual information for the corresponding keyword is selected, selection is possible on the basis of the status information and the use pattern information of the display apparatus 1.

Also, the controller 700 may display the manual information and a user interface (UI) image for adjusting a setting status of the display apparatus 1 in accordance with the corresponding keyword.

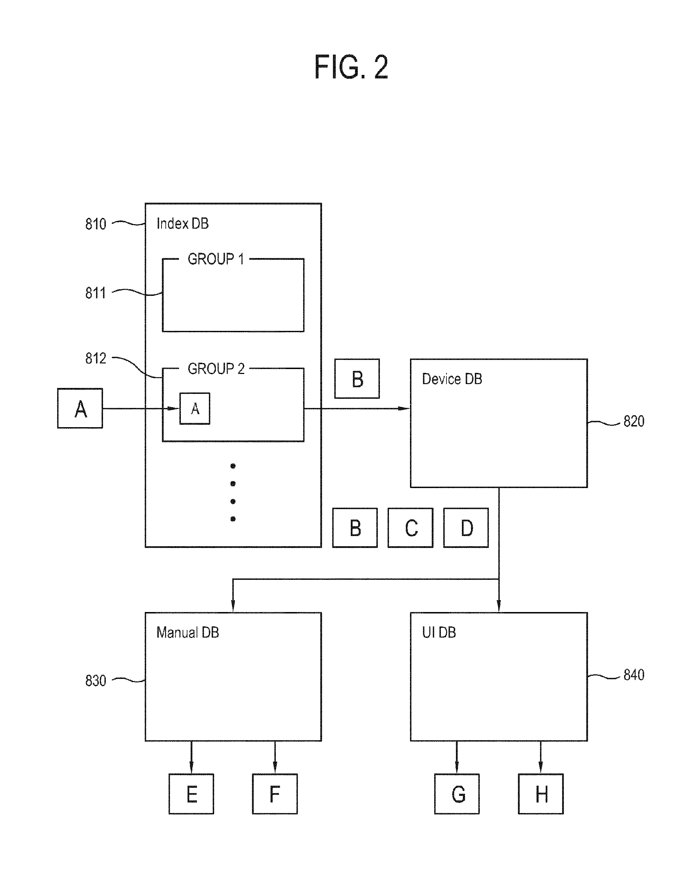

Below, a process of searching a database stored in the storage unit 600 on the basis of a keyword input through the user input unit 500 will be described with reference to FIG. 2. FIG. 2 is a conceptual diagram showing a process of searching databases 810, 820, 830, 840 on the basis of a keyword in the display apparatus 1.

In the following exemplary embodiment, both a manual image and a UI image are displayed in accordance with an input keyword, though it is understood that another exemplary embodiment is not limited thereto. Alternatively, for example, only the manual image may be displayed from among the manual image and the UI image.

As shown in FIG. 2, the storage unit 600 includes an index database (DB) 810, a device DB 820, a manual DB 830, and UI DB 840. It is understood that there is no limit to the information contained in the databases, and the information may include a text, an image, a moving picture, etc.

In the index DB 810, a plurality of keywords is classified into a plurality of keyword groups 811 and 812 on the basis of their meaning and contents, and an index keyword is set up to correspond to one keyword group 811, 812. For example, "sound," "noise," "voice," "volume," or the like keyword is classified into one keyword group 811, 812, and the index keyword of the corresponding keyword group 811, 812 may be set as "volume."

In the device DB 820, the current status information about the display apparatus's own structure and function is stored. According to one or more exemplary embodiments, the device DB 820 may further store a user's use pattern information. For example, the device DB 820 may contain a user's personal data, preference based on contents viewing records during a preset period of time, states of hardware/software of the display apparatus 1, or the like information about the display apparatus 1.

The manual DB 830 contains information corresponding to the index keyword, for example, a profile about the structure and function of the display apparatus 1 or a guide manual about a method of changing settings about the status of the display apparatus 1. Also, in association with the UI DB 840, the manual DB 830 may contain a guide manual for explaining UI settings defined in the UI DB 840. That is, the manual DB 830 is linked to information contained in each of the device DB 820 and the UI DB 840 so as to have a relationship therebetween.

The UI DB 840 contains UI settings corresponding to an index keyword. The UI settings are referred to by the video processor 200 so that the UI image can be generated in accordance with the corresponding UI settings.

Such a configuration of the database may be established on the basis of an ontology-based knowledge modeling system. The ontology is formal and explicit specifications about shared conceptualization, which includes records of the database and relationships between the records. In the ontology-based database, records or words related to a certain domain are hierarchically configured, and inference rules are additionally contained for extending the records or words. The ontology is the most centered concept in web application, which enables an information search on the basis of a meaning inference of a keyword when searching the database.

With this configuration of the database of the storage unit 600, the controller 700 searches which one of the keyword groups 811 and 812 of the index DB 810 corresponds to a keyword A, and selects an index keyword B corresponding to the keyword group 812 relevant to the keyword A. Such a process enables the controller 700 to perform searching based on the meaning or contents of the keyword A.

The controller 700 searches items, e.g., C and D about the current status information of the display apparatus 1 relevant to the index keyword B in the device DB 820.

The controller 700 searches the items corresponding to the index keyword B from the manual DB 830 and the UI DB 840, and selects the items related to C and D among the searched items. In accordance with preset conditions, the controller 700 may perform searching with regard to both the manual DB 830 and the UI DB 840, or only one of the manual DB 830 and the UI DB 840. If the items E and F are searched from the manual DB 830 and the items G and H are searched from the UI DB 840, the controller 700 transmits these items to the video processor 200.

If the use pattern information of the device DB 820 is further referred, the controller 700 searches the status information item and the use pattern information item of the display apparatus 1 related to the index keyword B from the device DB 820, and searches a corresponding item from the manual DB 830 and the UI DB 840 in accordance with the above search results.

Here, the keyword A may be a simple word or a compound word. If the keyword A is the compound word where a plurality of words are compounded, the keyword A is divided into respective words and searched in the index DB 810. If the plurality of index keywords are drawn, information respectively corresponding to the plurality of index keywords may be drawn from the device DB 820 or a super ordinate concept of information respectively corresponding to the plurality of index keywords or third information containing these information may be drawn from the device DB 820.

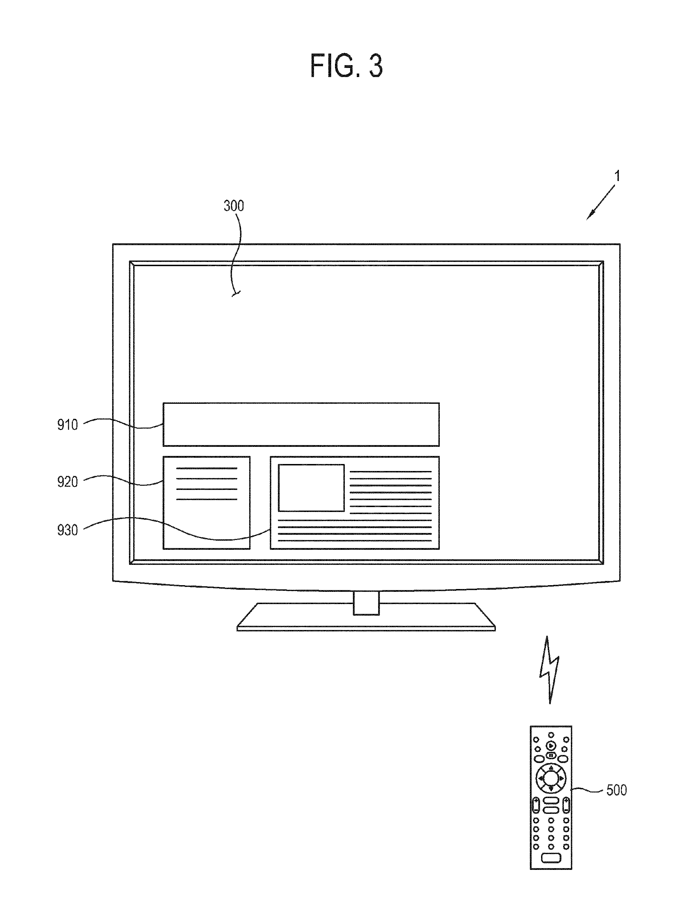

The video processor 200 displays manual images 920 and 930 and a UI image 910 on the display unit 300 as shown in FIG. 3 on the basis of the items received from the controller 700. FIG. 3 shows an example of a UI image 910 and manual images 920 and 930 in the display apparatus 1.

For example, it is assumed that a user inputs a keyword "adult contents" through the user input unit 500. In this case, as mentioned in the above-described exemplary embodiment with reference to FIG. 2, the controller 700 displays the UI image 910, the manual image 920 for explaining the adult contents, and the manual image 930 for explaining an operation method of the UI image 910 on the display unit 300 in accordance with searching results from the device DB 820, the UI DB 840, and the manual DB 830.

In more detail, the controller 700 can acquire the status information showing that the programs currently providable by the display apparatus 1 contain the adult contents, and the use pattern information about a user's age from the device DB 820 with regard to "adult contents."

The controller 700 determines whether the display apparatus 1 can currently provide the adult contents on the basis of the status information, and selects manual information items that vary according to determination results.

If it is determined that the display apparatus 1 can currently provide the adult contents on the basis of the status information, the controller 700 may select the different items from the manual DB 830 and the UI DB 840 with regard to respective cases that a user's age is searched as a minor and an adult on the basis of the use pattern information. For example, the controller 700 displays a warning message having an effect that "a minor cannot access adult contents" in the former case, but displays the method and UI for setting the adult contents in the latter case.

A user recognizes an explanation about the input keyword through the UI image 910 and the manual images 920 and 930 displayed as above, and then sets up the status about the related function of the display apparatus 1 through the user input unit 500.

Thus, according to an exemplary embodiment, the manual information can be searched on the basis of the keyword input by a user, and then displayed on the basis of the current status information of the display apparatus 1 among the searched manual information.

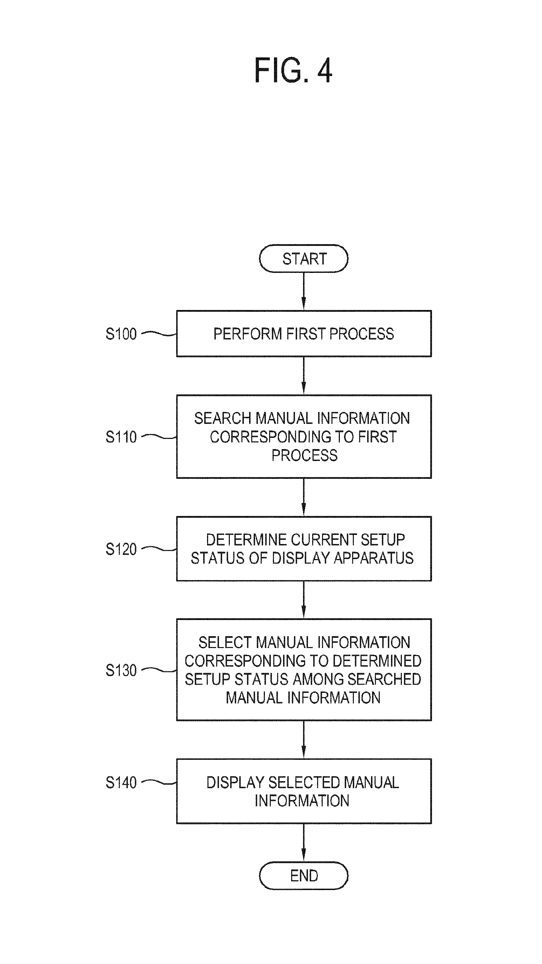

Below, a control method of the display apparatus 1 according to the present exemplary embodiment will be described with reference to FIG. 4. FIG. 4 is a control flowchart showing the control method.

If a predetermined first process is executed (operation S100), the controller 700 searches a plurality of manual information corresponding to the first process from the database stored in the storage unit 600 (operation S110).

The controller 700 determines a current status of the display apparatus 1 on the basis of the status information stored in the storage unit 600 (operation S120).

The controller 700 selects the manual information corresponding to the current status of the display apparatus 1 from among the plurality of searched manual information on the basis of the above determination results (operation S130). Then, the controller 700 displays the selected manual information on the display unit 300 (operation S140).

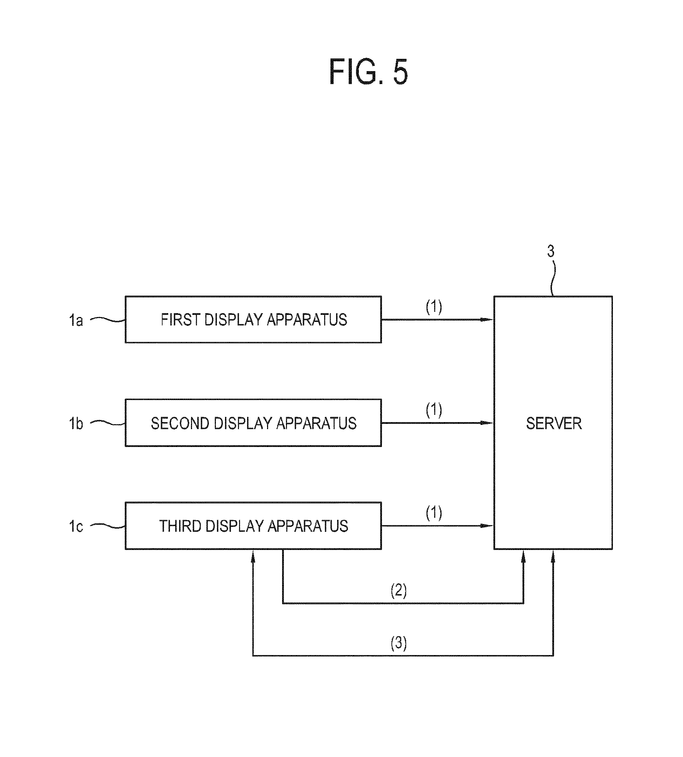

Meanwhile, if the display apparatus 1 is connected to the server 3, the display apparatus 1 may transmit its own status information to the server 3 and receive recommended setup information corresponding to the above status information from the server 3. Below, this case will be described as a second exemplary embodiment with reference to FIG. 5.

FIG. 5 is a conceptual diagram of signal transmission/reception between a server 3 and display apparatuses 1a, 1b and 1c according to the second exemplary embodiment.

As shown in FIG. 5, the server 3 connects and communicates with a plurality of display apparatuses 1a, 1b, and 1c through a network.

Each display apparatus 1a, 1b, 1c stores its own status information, and this status information is the same as described above. That is, since each status information of the respective display apparatuses 1a, 1b and 1c reflects each status of the display apparatuses 1a, 1b and 1c that are different from one another, the status information may differ.

As shown in (1) of FIG. 5, each of the display apparatuses 1a, 1b and 1c first transmits the status information to the server 3 in response to a request from the server 3. Here, each of the display apparatuses 1a, 1b and 1c may transmit the user pattern information together with the status information to the server 3.

The server 3 collects the status information from the display apparatuses 1a, 1b and 1c, and classifies users into different groups on the basis of the collected information. For example, the server 3 may classify users into movie, drama, sports, and animation groups in accordance with preference for contents; may classify users in accordance with residential districts; or may classify users in accordance with various categories such as ages or sex.

The server 3 generates recommended setup information on the basis of statistical analysis from the status information of the groups classified as above. That is, with respect to the status of a predetermined item in the recommended setup information, the server 3 may set up the highest frequent status among the status information in the corresponding group into the status of the corresponding item.

For example, when a status of a favorite channel in a movie preference group is set up, if the setup status information in the corresponding group denotes that a certain channel such as a movie professional channel is designated many times, the recommended setup information can be generated so that the above certain channel can be designated on the basis of the statistical analysis.

If the groups are classified and the recommended setup information about the corresponding group is determined, the server 3 stores the classified groups and recommended setup information.

In this state, for example, a third display apparatus 1c may transmit at least one of the status information and the use pattern information to the server 3 as shown in (2) of FIG. 5, and request the recommended setup information corresponding to the relevant information. The server 3 determines which one of the plural groups corresponds to the status information received from the third display apparatus 1c. When the group is determined, the server 3 transmits the recommended setup information about the corresponding group to the third display apparatus 1c as shown in (3) of FIG. 5.

If the recommended setup information is received from the server 3, the third display apparatus 1c displays the received recommended setup information as an image to be selectable. Then, a user can set up the status of the third display apparatus 1c on the basis of the displayed image of the recommended setup information.

Thus, according to an exemplary embodiment, a user can easily apply the recommended setup information suitable to his/her tastes to the display apparatus 1a, 1b, 1c, and share the status information of his/her own display apparatus 1 with other users.

Meanwhile, among various processes provided by the display apparatus 1, there is a predetermined first process having a plurality of sequential steps, and a user may want to execute this first process. Here, the first process is referred to as such for convenience of description, and is not limited to in kind, characteristic, etc., as long as the first process is providable by the display apparatus 1.

According to an exemplary embodiment, the controller 700 sequentially displays UI images for setting up steps of the first process in accordance with a setting of the corresponding step as an event of executing the first process is generated. At this time, the controller 700 displays both a method of setting up the corresponding step and information guiding the next step in the UI image corresponding to each step.

Thus, if a user wants to execute the first process, the display device 1 may guide a user to easily execute the first process.

Here, the event of executing the first process is generated when a user manipulates the user input unit 500.

Below, a process of buying a certain first application from an application purchasing site and executing the first application in the display apparatus 1 is the first process by way of example, and a procedure of running the first process in the display apparatus 1 will be described according to an exemplary embodiment.

As described above, the first process is not limited to the following exemplary embodiment, and may include any process having a plurality of steps among various functions, settings, and status changes providable by the display apparatus 1.

A user gives a command of generating the event for the first process through the user input unit 500. The controller 700 determines whether the first application to be finally executed is installed in an operating system of the display apparatus 1. If the first application is not installed in the operating system, the controller 700 determines whether the display apparatus 1 is connected to an external network so as to access the application purchasing site.

Such determination is performed by referring to the status information of the display apparatus 1, stored in the storage unit 600 as described above. The controller 700 can determine whether the display apparatus 1 is being currently connected to the external network on the basis of the status information of the display apparatus 1 stored in the storage unit 600.

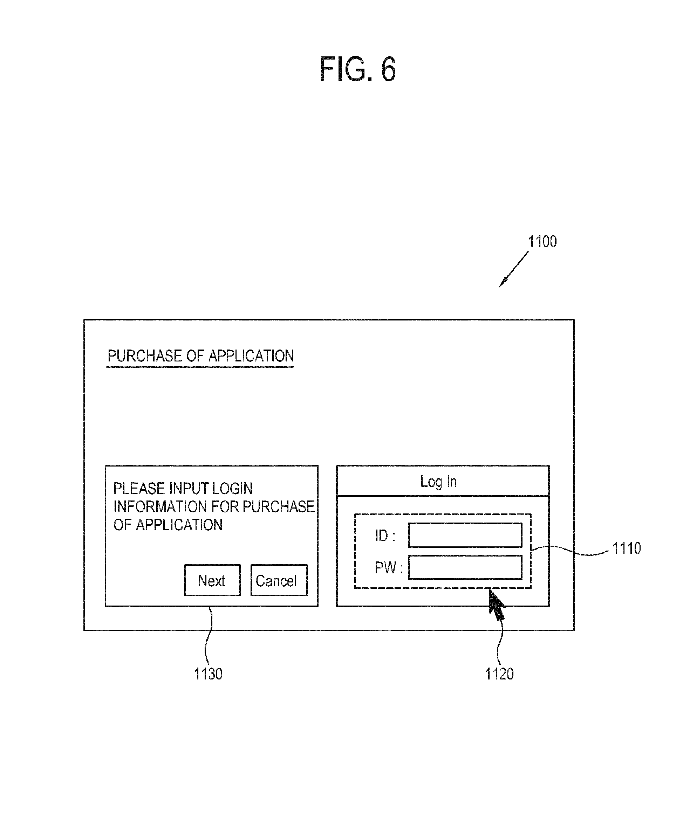

If the first application is not installed in the display apparatus 1 and the display apparatus 1 is currently connected to the external network, the controller 700 accesses the application purchasing site. Then, as shown in FIG. 6, the controller 700 displays a UI image 1100, through which login information is input to the accessed application purchasing site, on the display unit 300. As a matter of convenience, such a procedure will be called a first step of the first process.

FIG. 6 shows an example of the UI image corresponding to the first step of the first process in the display apparatus 1.

As shown in FIG. 6, the first step is to log in to the application purchasing site, and the UI image 1100 contains the login information, i.e., an image for receiving a user's ID and password. At this time, the UI image 1100 may have emphasis by highlighting an input form 1110 for the login information, automatically moving a cursor/pointer 1120 to the corresponding form, making the corresponding form flicker, etc., in order to guide a user to input the login information.

A user pays attention to such an emphasized area within the UI image 1100, and thus easily recognizes a prompt to input the login information at the first step and an area to input the login information.

Also, the UI image 1100 may include a message window 1130 for informing a user that s/he is to input the login information. A user can easily recognize what kind of input s/he needs to make at the first step through the message window 1130. For example, if a user selects a "Next" item of the message window 1130, a cursor is automatically moved to the input form for the login information so that a user can easily input the login information through the user input unit 500.

Further, the message window 1130 may further include information about what contents a second step following the first step has. For example, the message window 1130 may contain guide information that a list of available application items will be displayed after login.

If the login information is input at the first step, the controller 700 accesses the application purchasing site with the received login information.

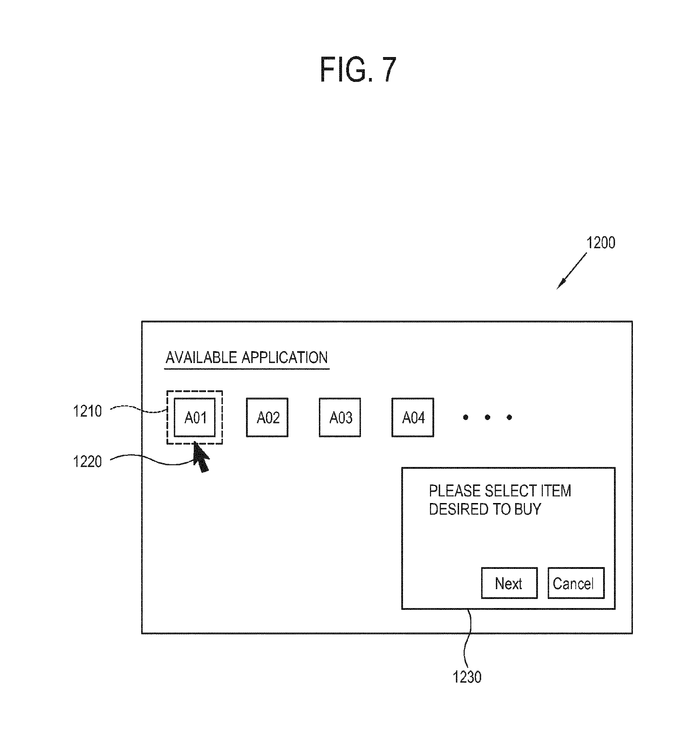

As shown in FIG. 7, the controller 700 displays a UI image 1200 containing the list of applications provided so that various applications can be selected and purchased from the application purchasing site.

FIG. 7 shows an example of the UI image 1200 corresponding to the second step of the first process in the display apparatus 1.

As shown in FIG. 7, the second step is a step where a user selects an item 'A01' of a first application among items 'A01,' 'A02,' 'A03' and 'Ao4' of the available applications displayed on the UI image 1200.

Similar to that described with reference to FIG. 6, the controller 700 may highlight the item 'A01' 1210 of the first application, or move the cursor 1120 to the corresponding item 'A01.' Alternatively, the controller 700 may display the message window 1230 for showing the selection of the item 'A01' on the UI image 1200.

Through the UI image 1200, a user can easily recognize that the item 'A01' of the first application is selected, and thus easily select the corresponding item 'A01.'

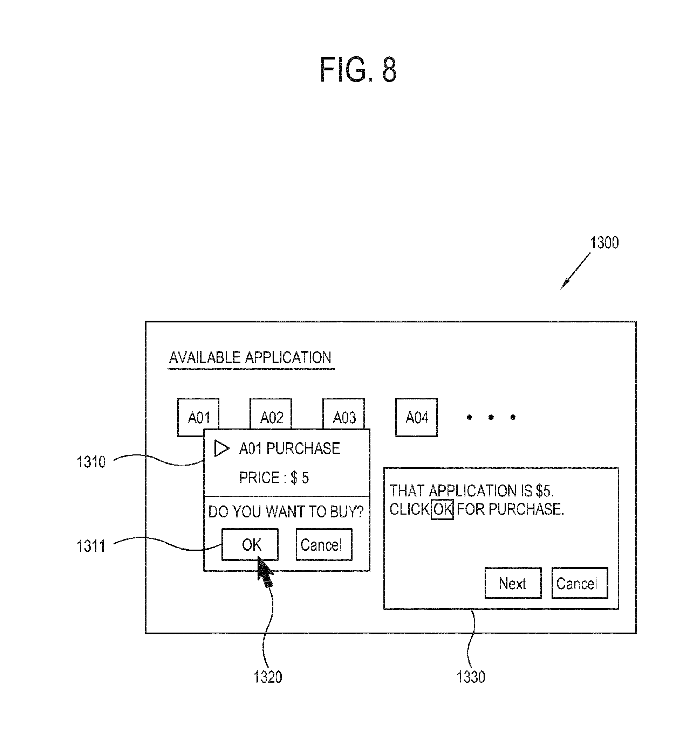

If the item 'A01' of the first application is selected at the second step, the purchase of the first application is made at a third step. Thus, the controller 700 as shown in FIG. 8 displays a UI image 1300 containing a purchase window 1310 for buying the first application.

FIG. 8 shows an example of the UI image 1300 corresponding to the third step of the first process in the display apparatus 1.

At the third step, the purchase window 1310 containing price information and a purchasing decision button 1311 for deciding the purchase is displayed in the UI image 1300. To guide a purchasing method of the first application at the third step, the controller 700 may highlight the purchasing decision button 1311 for the purchasing decision, or move the cursor 1320 to the purchasing decision button 1311 so that the buying decision can be achieved by only a click.

Also, the controller 700 may control a message window 1330 containing purchasing guide information to be displayed on the UI image 1300. A user may go to the next step by clicking a "Next" button of the message window 1330 through the user input unit 500. For example, if the "Next" button is clicked, the purchase of the first application may be allowable as if the purchasing decision button 1311 is clicked.

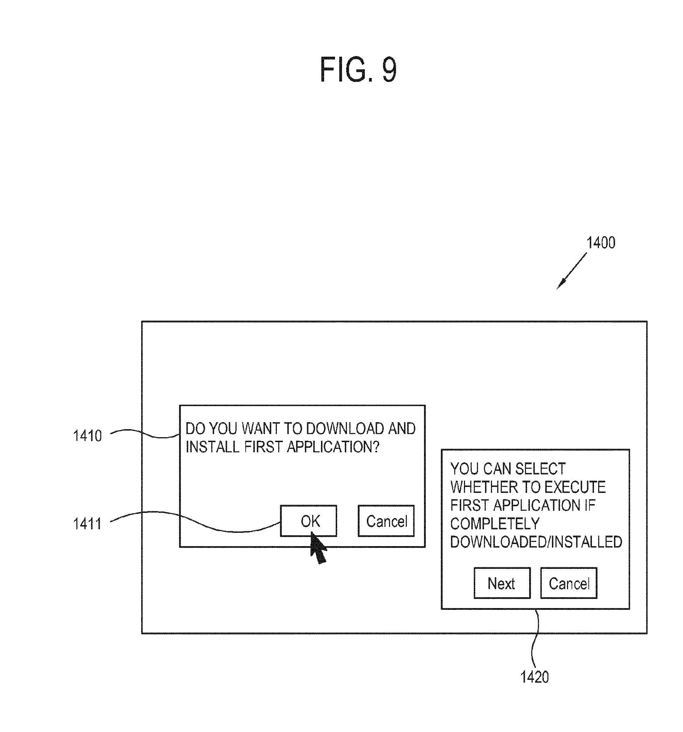

If the first application is purchased at the third step, the controller 700 controls a UI image 1400, which contains a message window 1410 for selectively downloading and installing the first application in the display apparatus 1, to be displayed as shown in FIG. 9.

FIG. 9 shows an example of the UI image 1400 corresponding to a fourth step of the first process in the display apparatus 1.

At the fourth step, if the selection decision button 1411 of the message window 1410 is clicked through the user input unit 500, the controller 700 downloads and installs the first application in the display apparatus 1.

Meanwhile, the UI image 1400 may further contain the message window 1420 for showing information about contents that can be set up/selected at a fifth step, for example, for guiding selection of whether to execute the first application after the download and the installation.

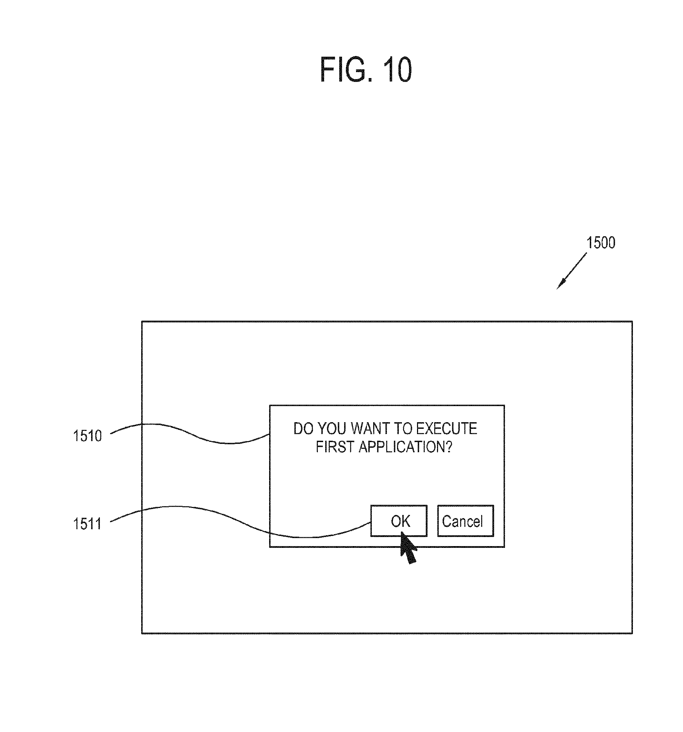

FIG. 10 shows an example of a UI image 1500 corresponding to the fifth step of the first process in the display apparatus 1.

As shown in FIG. 10, in the fifth step, the controller 700 displays the UI image 1500 containing a message window 1510 for selecting whether to execute the first application when the download and installation of the first application are completed.

A user may execute the first application by clicking a selection decision button 1511 of the message window 1510.

As described above, if an event occurs to execute the preset first process including a plurality of steps to be sequentially executed, the display apparatus 1 in the present exemplary embodiment displays the UI image for setting up each step in accordance with the respective steps. Here, the display apparatus 1 displays the UI image corresponding to each step, containing at least one of the guide information about a setup change in the corresponding step and the guide information about a setup method in the sequential next step.

Thus, the easy change in the setup for the first process is guaranteed to a user.

In accordance with the characteristics of the corresponding step, the UI image may not contain the guide information about a setup change in the corresponding step or the guide information about a setup method in the sequential next step.

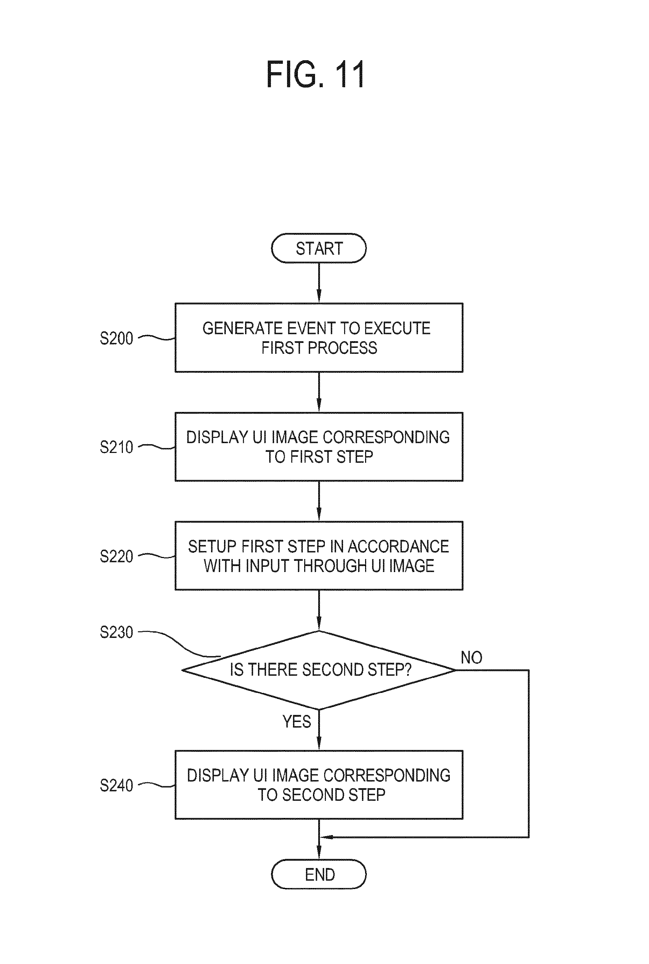

Below, a method of controlling the display apparatus 1 according to the present exemplary embodiment will be described with reference to FIG. 11. FIG. 11 is a control flowchart of such a method.

As shown in FIG. 11, if an event occurs to execute the first process (operation S200), the controller 700 displays a UI image corresponding to the first step in the first process (operation S210).

The controller 700 performs the setup for the first step in accordance with an input through the UI image (operation S220). Then, the controller 700 ascertains whether there is a second step following the first step in which the setup is performed (operation S230).

If there is the second step, the controller 700 displays a UI image corresponding to the second step (operation S240). Then, the above operations are repeated until all the steps are set up and the first process is completed.

While setting up the step through the UI image corresponding to each step of the first process, a setup status of a certain step for performing the first process may be the same as the current status of the display apparatus 1, i.e., there may be no need of changing the setup status of the corresponding step.

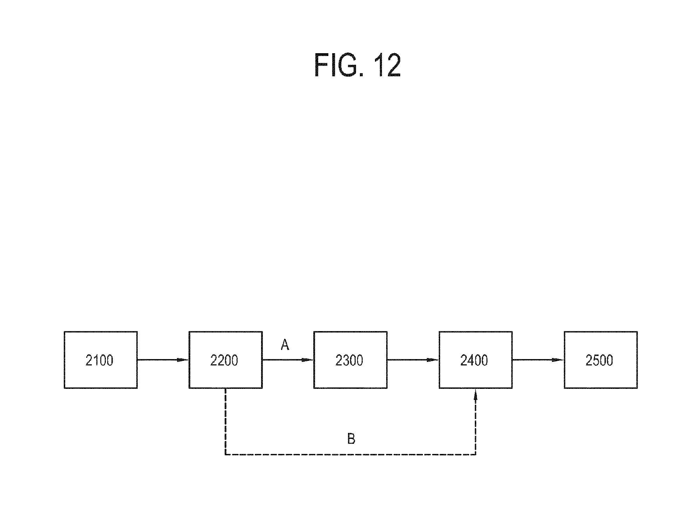

For example, there may be a case where the first process includes five steps and there may be no need to change the setup status of the third step in the first process. An exemplary embodiment in this case will be described with reference to FIG. 12.

FIG. 12 is a conceptual view showing a display order of UI images 2100, 2200, 2300, 2400 and 2500 corresponding to steps of the first process in a display apparatus according to a fourth exemplary embodiment.

Referring to FIG. 12, the UI images 2100, 2200, 2300, 2400 and 2500 respectively correspond to the first, second, third, fourth, and fifth steps to be set up in sequence. The controller 700 proceeds from displaying the UI image 2100 corresponding to the first step to displaying the UI image 2500 corresponding to the fifth step as described above.

However, there may be a case that the setup status of the third step among these steps is the same as the current setup status of the display apparatus 1. For example, it is assumed that the first process is a process for executing a game application, and the third step is a step for checking whether a game controller (not shown) used in the game application is connected to the display apparatus 1.

At this time, if the game controller (not shown) is already connected to the display apparatus 1, the third step is not needed in performing the first process.

Therefore, the controller 700 controls the UI image 2400 corresponding to the fourth step following the third step (B) to be displayed without displaying the UI image 2300 corresponding to the third step (A) after displaying the UI image 2200 corresponding to the second step prior to the third step. That is, the controller 700 skips over the third step and performs the fourth step after setting up the second step.

Since the UI image 2300 corresponding to the third step is not displayed, it is possible to reduce a burden on a user and a load on a system with respect to the implementation of the first process

In the foregoing exemplary embodiment, only one step among the plurality of steps is skipped. However, it is understood that another exemplary embodiment is not limited thereto. Alternatively, one or more steps may be skipped depending on the setup status.

Meanwhile, in the foregoing exemplary embodiments described with reference to FIGs. 6 to 10, the first process includes five steps, and the UI images are sequentially displayed corresponding to the respective steps, though it is understood that another exemplary embodiment is not limited thereto. Alternatively, according to another exemplary embodiment, a user may select all the steps in a lump (i.e., batch) instead of setting up the respective steps in sequence.

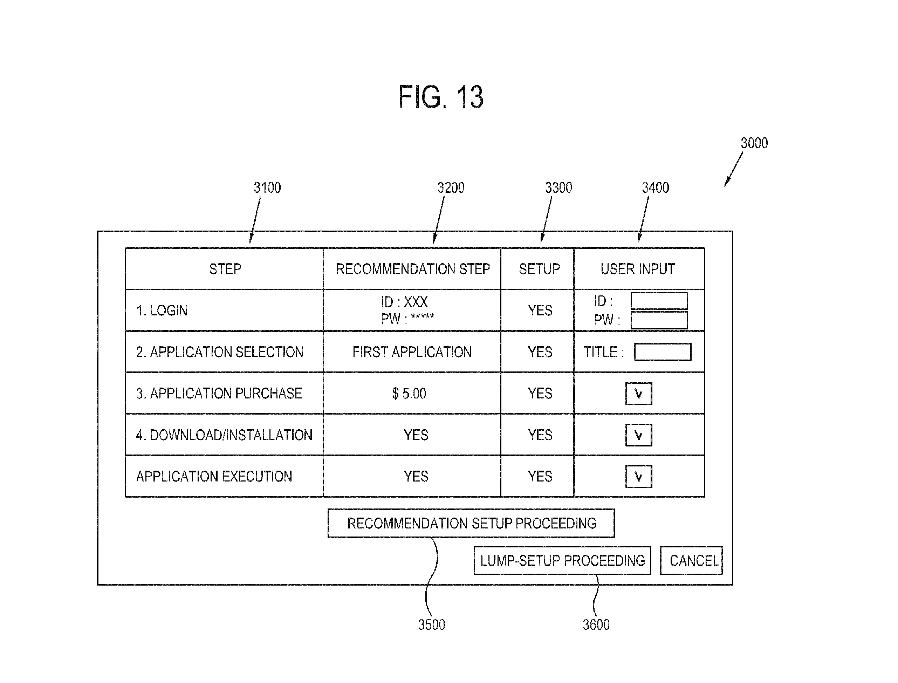

Below, such an alternative exemplary embodiment will be described with reference to FIG. 13. In the present exemplary embodiment, examples of the first process and each step are the same as those of the exemplary embodiments described with reference to FIG. 6 to 10.

FIG. 13 is an example of a UI image 3000 for setting up the first preset process in a lump in the display apparatus 1 according to an exemplary embodiment.

As shown in FIG. 13, the controller 700 automatically displays the UI image 300 for setting up the first process in a lump when an event of executing the first process occurs, or displays the UI image 300 for setting up the first process in a lump when an event of requesting a recommendation setup occurs.

The UI image 3000 includes content information 3100 about each step, recommendation setup information 3200 (e.g., default setup information) about each step, a form 3300 for selecting whether to accept the setup of the recommendation setup information 3200 of each step, and a form 3400 for allowing a user to input or select information if the recommendation setup information 3200 is not accepted.

Through the content information 3100 about each step, a user may previously predict and recognize what step will be progressed. Further, a user checks default values shown in the recommendation setup information 3200, and clicks a "lump-setup proceeding" button 3600 after setting up the step-setup form 3300 with "Yes" or directly clicks a "recommendation setup proceeding" button 3500 if all the default values of the recommendation setup information 3200 of the respective steps are acceptable. The controller 700 progresses through the respective steps sequentially in accordance with the recommendation setup information 3200, thereby performing the first process in a lump.

As described above, the recommendation setup information 3200 may be determined by the controller 700 on the basis of the user's use pattern information and the current status information of the display apparatus 1.

If a user does not accept the recommendation setup information 3200 of at least some step, the setup form 3300 is set up with "No" and the "lump-setup proceeding" button 3600 is clicked after desired information is input to the user input form 3400. In this case, the controller 700 progresses through the corresponding step in accordance with the user input form 3400 and not the recommendation setup information 3200.

For example, it is assumed that a user previously changes a password of login information through another display apparatus 1 or computer (not shown). In this case, such a changed password is not reflected on the display apparatus 1, and therefore the recommendation setup information of the first step setup by the controller 700 contains an unchanged password.

If a user wants to change only the password and accept the recommendation setup with regard to the other steps, s/he sets up the setup forms 3300 of the second to fifth steps with "Yes," but sets up the setup forms 3300 of the first step with "No," thereby inputting a new password in the user input form 3400 of the first step and clicking the "lump-setup proceeding" button 3600.

Thus, the controller 700 progresses through the first step with the new password, and progresses through the other steps with the recommendation setup information.

Further, the controller 700 controls the storage unit 600 to store password information input to the user input form 3400, and controls the recommendation setup information 3200 of the first step to contain the password information when displaying the next UI image 3000.

That is, the controller 700 updates the information, which is inputted through the user input form 3400 and applied to the proceeding, with the recommendation setup information 3200.

Accordingly, the display apparatus 1 is convenient for a user to, in a lump, set up the respective steps involved in the first process.

While not restricted thereto, one or more exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. One or more exemplary embodiments may also be realized as a data signal embodied in a carrier wave and comprising a program readable by a computer and transmittable over the Internet. Moreover, one or more units of the display apparatus 1 can include a processor or microprocessor executing a computer program stored in a computer-readable medium.

According to an aspect of an exemplary embodiment, a computer readable recording medium having recorded thereon a program executable by a computer for performing the method, the method including: generating an event for performing a process comprising a plurality of sequential steps; and displaying, in sequence corresponding to the respective plurality of sequential steps, a plurality of user interface (UI) images for setup of the plurality of sequential steps, wherein a UI image, among the plurality of UI images, corresponding to a first step among the plurality of sequential steps comprises at least one of setup guide information for the first step and guide information for a second step sequentially following the first step according to current status information of the display apparatus.

According to an aspect of an exemplary embodiment, a computer readable recording medium having recorded thereon a program executable by a computer for performing the method, a control method of an image processing apparatus, the method including: generating an event for performing a process comprising a plurality of sequential steps; and outputting, in sequence corresponding to the plurality of sequential steps, a plurality of user interface (UI) images for setup of the plurality of sequential steps, wherein a UI image, among the plurality of UI images, corresponding to a first step among the plurality of sequential steps comprises setup guide information for the first step according to current status information.

Although a few exemplary embodiments have been shown and described, it will be appreciated by those skilled in the art that changes may be made in these exemplary embodiments without departing from the invention, the scope of which is defined in the appended claims.

## Claims

1. A display apparatus comprising:
a display unit;
a video processor which processes an image to be displayed on the display unit;
a storage unit which stores status information related to at least one of a structure and a function of the display apparatus; and
a controller which, when an event of executing a preset process comprising a plurality of sequential steps occurs, controls the video processor so that user interface (UI) images for setting up the plurality of sequential steps are sequentially displayed corresponding to the plurality of sequential steps on the display unit,
wherein the controller controls a UI image, among the plurality of UI images, corresponding to a first step among the plurality of sequential steps to comprise at least one of setup guide information for the first step and guide information for a second step following the first step according to current status information.

2. The display apparatus according to claim 1, wherein the controller skips over the second step after the first step and displays a UI image corresponding to a third step following the second step if a setup status in the second step for implementing the process is equal to a current status of the display apparatus.

3. The display apparatus according to claim 2, wherein:
the storage unit stores use pattern information of a user with regard to the display apparatus; and
the controller determines whether the setup status in the second step is equal to the current status of the display apparatus according to at least one of the use pattern information and the status information stored in the storage unit.

4. The display apparatus according to any preceding claim, wherein the setup guide information for the first step comprises an emphasis on a setup or selection item in the UI image to implement the process.

5. The display apparatus according to claim 4, wherein the emphasis on the item comprises at least one of highlighting the item, automatically moving a cursor/pointer to the item, and making the item flicker.

6. The display apparatus according to any preceding claim, wherein the guide information for the second step comprises a message window containing a description about at least one of a content and a setup method of the second step.

7. The display apparatus according to any preceding claim, wherein the controller displays a lump-proceeding UI image that provides a setup for the plurality of sequential steps to be individually implemented when the event of performing the process occurs, and performs the plurality of sequential steps in a lump in accordance with the setup through the lump-proceeding UI image.

8. The display apparatus according to claim 7, wherein:
the storage unit stores a user's use pattern information about the display apparatus; and
the controller determines a recommendation setup for each step based on at least one of the use pattern information and the status information stored in the storage unit, and displays the determined recommendation setup as a default value of each step in the lump-proceeding UI image.

9. The display apparatus according to any preceding claim, further comprising a user input unit for generating the event to perform the first process.

10. A control method of a display apparatus, the method comprising:
generating an event of performing a preset process comprising a plurality of sequential steps; and
displaying a plurality of UI images for setup of the plurality of sequential steps in sequence corresponding to the respective plurality of sequential steps,
wherein a UI image, among the plurality of UI images, which corresponds to a first step among the plurality of sequential steps, comprises at least one of setup guide information for the first step and guide information for a second step following the first step according to current status information.

11. The method according to claim 10, wherein the displaying the UI image comprises skipping over the second step after the first step and displaying a UI image corresponding to a third step following the second step if a setup status in the second step for implementing the first process is equal to a current status of the display apparatus.

12. The method according to claim 10 or 11, wherein the setup guide information for the first step comprises an emphasis on a setup or selection item in the UI image to implement the process.

13. The method according to claim 10, 11 or 12, wherein the guide information for the second step comprises a message window containing a description about at least one of a content and a setup method of the second step.

14. The method according to any of claims 10 to 13, wherein the displaying the UI image comprises:
displaying a lump-proceeding UI image that provides a setup for the plurality of sequential steps to be individually implemented; and
performing the plurality of sequential steps in a lump in accordance with the setup through the lump-proceeding UI image.

15. The method according to claim 14, wherein the displaying the lump-proceeding UI image comprises:
determining a recommendation setup about each step based on at least one of the use pattern information and the status information of the display apparatus; and
displaying the determined recommendation setup as a default value of each step in the lump-proceeding UI image.
